(19) Europäisches Patentamt
European Patent Office
Office européen des brevets

(11) **EP 2 293 224 B1**

(12) **EUROPÄISCHE PATENTSCHRIFT**

(45) Veröffentlichungstag und Bekanntmachung des Hinweises auf die Patenterteilung:
**22.07.2015 Patentblatt 2015/30**

(51) Int Cl.:
***G06K 13/08*** *(2006.01)* ***H01R 13/629*** *(2006.01)*

(21) Anmeldenummer: **10008836.8**

(22) Anmeldetag: **25.08.2010**

(54) **Kartenleser für Chipkarten, insbesondere für Micro-SD-Karten und Transflash-Karten nach dem Push-Push-Prinzip**

Card reader for chip cards, in particular for micro SD cards and transflash cards according to the push-push principle

Lecteur de carte pour cartes à puce, notamment pour microcartes SD et cartes transflash selon le principe push-push

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.08.2009 DE 102009038825**

(43) Veröffentlichungstag der Anmeldung:
**09.03.2011 Patentblatt 2011/10**

(73) Patentinhaber: **Amphenol-Tuchel Electronics GmbH**
**74080 Heilbronn (DE)**

(72) Erfinder:
• **Rau, Michael**
**74177 Bad-Friedrichshall (DE)**
• **Dörr, Martin**
**74211 Leingarten (DE)**
• **Gerner, Sven**
**74078 Heilbronn (DE)**

(74) Vertreter: **Wagner, Karl H.**
**Wagner & Geyer**
**Gewürzmühlstrasse 5**
**80538 München (DE)**

(56) Entgegenhaltungen:
**EP-A1- 1 434 315**

EP 2 293 224 B1

**Beschreibung**

Die vorliegende Erfindung bezieht sich auf einen Kartenleser nach dem Push-Push-Prinzip, bei dem mit einem ersten Push auf eine Karte ein Schieber in eine Ruheposition gebracht wird, die der Leseposition der Karte entspricht und mit einem zweiten Push die genannte Karte wieder in eine Entnahmeposition gelangt. Die Kartentypen auf die sich vorliegender Kartenleser bezieht sind Micro-SD-Karten und Karten vom Typ Transflash.

Üblicherweise weisen Push-Push-Leser eine einzelne Steuerkurve auf, die üblicherweise in einem Kontaktträger integriert ist und die es ermöglicht, die Karten nach einem ersten Push in der Leseposition zu halten, um diese nach einem weiteren Push wieder zu verlassen und schließlich in einer Nichtleseposition, in der die Karte dem Leser entnommen werden kann, endet. Push-Push-Leser, welche speziell für kleine Kartentypen, wie beispielsweise die vorher genannten Micro-SD-Karten oder Transflash-Karten, deren Kartengröße kleiner als von SIM-Karten oder kleinen Speicherkarten entspricht, unterliegen einer ständigen Miniaturisierung. Neben bekannten SIM-Kartenlesern mit Klapp-/Schiebedeckeln tritt nun das Problem der Miniaturisierung auch bei Kartenlesern nach dem Push-Push-Prinzip auf. Wesentlich für die Bauhöhe von den oben genannten Steuerkurven ist die Anzahl der notwendigen Stufen, die ein störungsfreies Einführen oder Entnehmen der Karte garantieren sollen. Die Bauhöhe soll in der Größenordnung von 1 mm liegen.

Aus der EP 1 434 315 A1 ist bereits ein Push-Push-Kartenleser bekannt, und zwar mit einem Kontaktträger, einem Deckel und einem durch die einzusteckende und zu lesende Karte betätigbaren Push-Push-Mechanismus, der Folgendes aufweist: einen hin- und herbeweglich angeordneten Kartenschieber, einen im Kartenschieber befindlichen Steuerkurvenkanal, ein mit dem Steuerkurvenkanal in Eingriff stehendes Steuerelement, welches mit einem Teil eines Eingriffs-Endes in den Steuerkurvenkanal eingreift und an einem anderen Ende, dem Befestigungsende, am Kontaktträger angebracht ist, wobei der Steuerkurvenkanal eine von inneren und äußeren Führungsbahnen begrenzte Laufbahn aufweist, und eine einer Leseposition der Karte entsprechende im Steuerkurvenkanal angeordnete Rastposition für das Steuerelement definiert, wobei die Laufbahn des Steuerkurvenkanals im Bereich der Rastposition des Steuerkurvenkanals mehrere Höhenunterschiede bildet.

Der im Patentanspruch 1 angegebenen Erfindung liegt das wesentliche Problem bisheriger Push-Push-Kartenleser zugrunde, dass durch die Miniaturisierung von Kartenlesern insbesondere nach dem Push-Push Prinzip die Haltekräfte an einem Steuerelement, welches in die Steuerkurve eingreift und auf einem Kartenschieber montiert ist und innerhalb des Steuerkurvenkanals bewegt wird und dabei in einer Rastposition des Steuerkurvenkanals einrastet, aufgrund der geringen Höhe der Steuerkurve zu gering sind.

Das Problem der geringen Haltekräfte des Steuerelements wird erfindungsgemäß dadurch gelöst, dass der Kartenleser über eine zweite Steuerkurve verfügt, die im Deckel des Kartenlesers angeordnet ist und in die ein vorzugsweise gestanztes T-förmiges Steuerelement zusätzlich zum Steuerkurvenkanal eingreift. Alternativ kann das T-förmige Steuerelement auch mittels geeigneter Herstellungsverfahren in die gewünschte Form gebracht werden. Das Eingreif-Ende des Steuerelementes hat dabei die Form eines T-Ankers, bei dem ein erster Teil des T-Ankers in die Steuerkurve eingreift, die in dem Kontaktträger integriert ist und ein zweiter Teil, der dem ersten Teil gegenüberliegt, gleichzeitig in eine Steuerkurvenaussparung, welche in einem Deckel des Kartenlesers integriert ist, eingreift. Durch das gleichzeitige eingreifen in zwei Steuerkurven, insbesondere in der Leseposition, werden die Haltekräfte auf das T-förmige Steuerelement gegenüber herkömmlichen Ausführungen von Kartenlesern nach dem Push-Push Prinzip deutlich, ca. um den Faktor drei, erhöht.

Dies wird gemäß der vorliegenden Erfindung dadurch gelöst, dass der auf dem Kontaktträger beweglich aufgebrachte Kartenschieber, der mit einem U-förmigen Federabschnitt ausgestattet ist, welcher ein Abbremsen des Kartenschiebers an einem Stoppelement bewirkt, wenn die Karte über einen zweiten Push aus der Ruheposition in die Entnahme oder Ausgangsposition gebracht wird und der weiterhin ein Auswerfen und Blockieren der Karte bewirkt, wobei das Blockieren der Karte durch den Federabschnitt am Schieber ein Herausfallen der Karte aus dem Kartenleser verhindert, wenn sich diese in der Entnahme- oder Nichtleseposition befindet.

Die mit der Erfindung erzielten Vorteile sind im Wesentlichen das Erzielen hoher Haltekräfte durch das Eingreifen des Steuerelementes in die Steuerkurve und zusätzlich in die Steuerkurvenaussparung. Des Weiteren kann eine geringe Gesamthöhe des Push-Push-Kartenlesers durch das Einsparen mindestens einer weiteren Stufe innerhalb des Steuerkurvenkanals erreicht werden, ohne die in konventionellen Steuerkurven ein funktionsgerechtes Führen des Steuerelementes innerhalb des Steuerkurvenkanals nicht zu erzielen ist.

Dies kann dadurch erreicht werden, indem ein Teil der Steuerkurvenaussparung , das aus dem Gehäusedeckel ausgestanzt wird, eine seitliche Kraft auf den Steuerdraht ausübt und somit ein Zurückkehren des Steuerelementes, welches insbesondere als Steuerelement mit einem T-förmigen Anker, beziehungsweise Eingreif-Ende ausgeführt ist, in den ersten Abschnitt des Steuerkurvenkanals, was üblicherweise durch eine Stufe realisiert ist, verhindert wird und stattdessen in eine Ruheposition, die der Leseposition der Karte entspricht, gezwungen wird. Durch das Ausstanzen des Teils der Steuerkurvenaussparung aus dem Gehäusedeckel ergibt sich ein weiterer Vorteil dieser Art der Ausführung, indem zusätzliche Bauteile eingespart werden können und die Funktionstüchtigkeit. des Push-Push-Mechanismus auch nach intensiver Nutzung sichergestellt werden kann, da eine Stufe weniger einem Alterungsprozess unterliegt.

Der Arbeitsschritt des Ausstanzens von Federlappen im Gehäusedeckel ist im Herstellungsprozess unabhängig von der Notwendigkeit des Teils der Steuerkurvenaussparung vorhanden um eine vorteilhafte Führung insbesondere Gleitführung der Karte innerhalb des Kartenlesers zu gewähren und stellt somit keinen zusätzlichen Herstellungsaufwand dar. Damit wird aber ebenfalls das Ziel der Einsparung von Bauteilen durch keinen zusätzlichen Herstellungsschritt erreicht. Die Federlappen können vorzugsweise die Karte auch im gewissen Umfang halten und auch Niederhalten

Ein weiterer Vorteil ergibt sich durch die Ausführung des Kartenschiebers mit dem U-förmigen Federabschnitt an dessen erstem Ende, welches mehrere Funktionen erfüllt. Zum einen bewirkt eine Bremsnase dieses federnden Abschnitts am Kartenschieber ein Abbremsen nach dem zweiten Push auf die Karte an einem Stoppelement am Kontraktträger, wenn die Karte in die Ausgangsstellung bewegt wird, und zum anderen wird die Karte durch eine zweite Nase, die Einrastnase, die sich in einer seitlichen Öffnung, vorzugsweise der Kartenaussparung, an der Karte einklinkt, am Herausfallen gehindert. Dies erlaubt unter anderem eine Nutzung des Push-Push-Kartenlesers in einer Überkopf-Position, bei der die Karteneinschub-Öffnung des Lesers nach unten zeigt.

Weitere Einzelheiten der Erfindung ergeben sich aus der Beschreibung von Ausführungsbeispielen anhand der Zeichnungen; in den Zeichnungen zeigt:

Fig. 1     ein erstes Ausführungsbeispiel eines erfindungsgemäßen Push - Push Kartenlesers mit Federlappen und der Steuerkurvenaussparung, welche aus dem Metalldeckel ausgestanzt ist, wobei sich der Kontaktträger unterhalb des Metalldeckels befindet und in der Zeichnung, am vorderen rechten Ende und durch die Aussparungen im Metalldeckel zu erkennen ist;

Fig. 2     den Kontaktträger mit den entsprechenden Kontakten, einem Kartenanwesenheitsschalter am oberen Ende und einen Teil des Push-Push Mechanismus, gebildet aus Spiralfeder, Steuerkurvenkanal, Kartenschieber und T-förmigem Steuerelement;

Fig. 3     einen perspektivisch vergrößerten Ausschnitt von Fig. 2, in dem man die Stufen innerhalb des Steuerkurvenkanals erkennen kann;

Fig. 4     den Kartenleser mit zum Teil eingeführter Karte, jedoch ohne den Metalldeckel;

Fig. 5     die Karte in der so genannten Überhubposition, voll eingeschoben, wobei das Steuerelement sich noch im Steuerkurvenkanalabschnitt (SKA) oberhalb der Ruheposition befindet, dabei liegt die Karte an der Kartenschieber-Anlagefläche an und die Nase des U-förmigen Federelementes am Kartenschieber ist in der Kartenaussparung eingerastet;

Fig. 6     ein Detail von Fig. 5, bei dem das T-förmige Steuerelement in der Ruheposition des Steuerkurvenkanals und der Steuerkurvenaussparung dargestellt ist;

Fig. 7     das T-förmige Steuerelement;

Fig. 8     ein Detail von Fig. 5, wobei der Kartenschieber in der Überhubposition mit in der Karte eingerasteter Nase des Kartenschiebers gezeigt ist;

Fig. 9     den Push-Push Kartenleser mit eingeschobener Karte in der Leseposition, wobei sich das T-förmige Steuerelement in der Rastposition des Steuerkurvenkanals befindet;

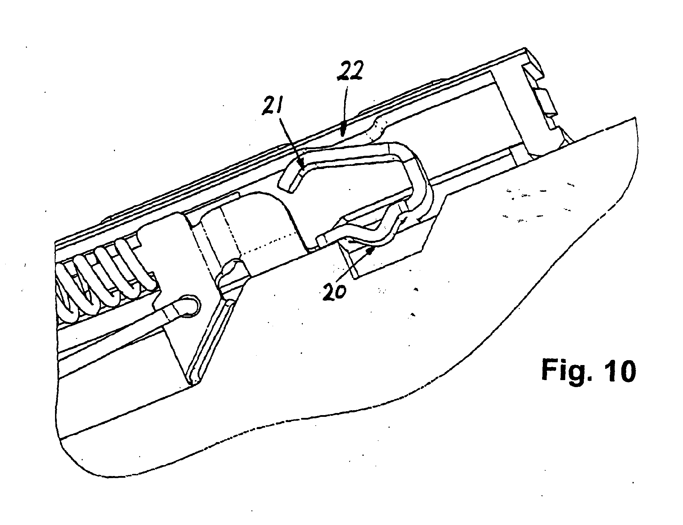

Fig. 10    ein Detail des Kartenschiebers beim Auswurf der Karte, wobei das U-förmige Federelement mit seiner Nase am Stoppelement des Kartenhalters abgebremst wird;

Fig. 11    im oberen linken Teil des Kartenschiebers die Karten-Anlagefläche, wobei sich daneben die Aufnahme für das T-förmige Steuerelement befindet und rechts daneben die Aufnahme für die Spiralfeder, und wobei im unteren Teil des Kartenschiebers sich das U-förmige Federelement mit den beiden Nasen links und rechts befindet;

Fig. 12    ein Detail des Steuerkurvenkanals mit den verschiedenen Steuerkurvenkanalabschnitten (SKA), wobei sich im oberen mittleren Teil die Rastposition befindet, flankiert von den beiden Steuerkurvenkanalabschnitts-Stufen, wobei ebenfalls die Schnittverläufe der Fig. 13 und 14 dargestellt sind;

Fig. 13    eine Schnittdarstellung aus Fig. 12 entlang A-A. Im oberen Teil ist die Rastposition, sowie die Stufe (Plateau) im ersten Teil des Steuerkurvenkanals, im unteren Bildbereich die im zweiten Teil des Steuerkurvenkanals befindliche Stufe, als auch der Anfang, bzw. das Ende des Steuerkurvenkanals zu erkennen, ist;

Fig. 14    eine Schnittdarstellung aus Fig. 12 entlang B-B, wobei in der Mitte die Rastposition, flankiert von der Stufe (Rampe) links von der Rastposition und der Stufe (Plateau) rechts von der Rastposition gezeigt ist und die beiden Höhenunterschiede bezüglich der Kontaktträgerunterseite Deutlich zu erkennen sind.

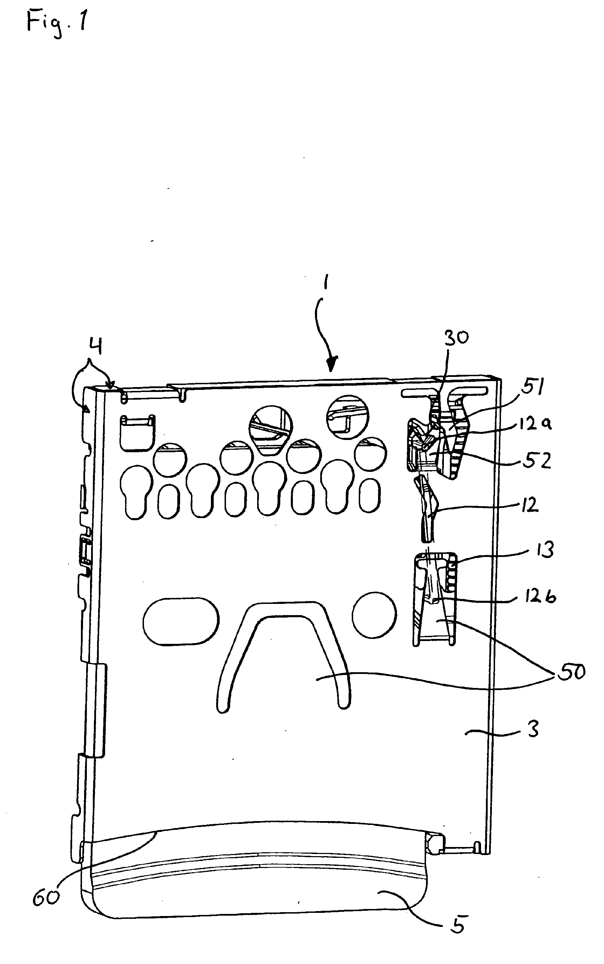

In Figur 1 ist ein Push-Push Kartenleser 1 gezeigt, der vorzugsweise ein Chipkarten, Mikro-SD oder Transflash-Kartenleser ist. Ganz generell dient der Push-Push Kartenleser 1 dazu, eine elektrische Verbindung zwischen der Karte und einem anderen elektrischen Gerät, z. B einer Kamera herzustellen, um Daten die auf einer Karte gespeichert sind zu lesen oder Daten darauf abzulegen. Der erfindungsgemäße Push-Push Kartenleser 1 weist einen Kontaktträger 2, einen Push-Push Mechanismus 10 und einen Deckel 3 auf. Der Push-Push Mechanismus 10, weist einen Kartenschieber 11, ein vorzugsweise gestanztes Steuerelement 12 mit einem T-förmigen Anker 12a, der ein Eingreif-Ende des Steuerelementes 12 bildet und einem Befestigungsende 12b, eine Feder 13, einen Steuerkurvenkanal 30 und eine vorzugsweise vom Deckel 3 gebildete Steuerkurvenaussparung 300 zum zusätzlichen Führen des T-förmigen Steuerelementes 12, auf. Der Kontaktträger 2 besitzt (in Fig. 1) am oberen Ende, d.h. gegenüber einer am unteren Ende vorgesehenen Karteneinführöffnung 60, und an der rechten Seite, Rahmenstege 4, die miteinander verbunden sind um eine Steigerung der Steifigkeit des Kontaktträgers 2 zu erreichen. Der Deckel 3 weist Andruckmittel 50 auf. Im Falle des gezeigten Metalldeckels 3, sind die Andruckmittel 50 in der Form von mehreren ausgestanzten Federlappen 50 ausgebildet, die dem Anpressen der Karte 5 -Federlappen 50 in der Mitte-, sowie dem Anpressen des T-förmigen Steuerelementes 12 -Federlappen 50 auf der rechten Seite des Kartenlesers 1-dienen. Ebenfalls dargestellt sind, die Steuerkurvenaussparung 300, ein Einschub-Biegeteil 51 und einRastposition-Biegeteil 52, die zur Führung des T-förmigen Steuerelementes 12 vorgesehen sind.

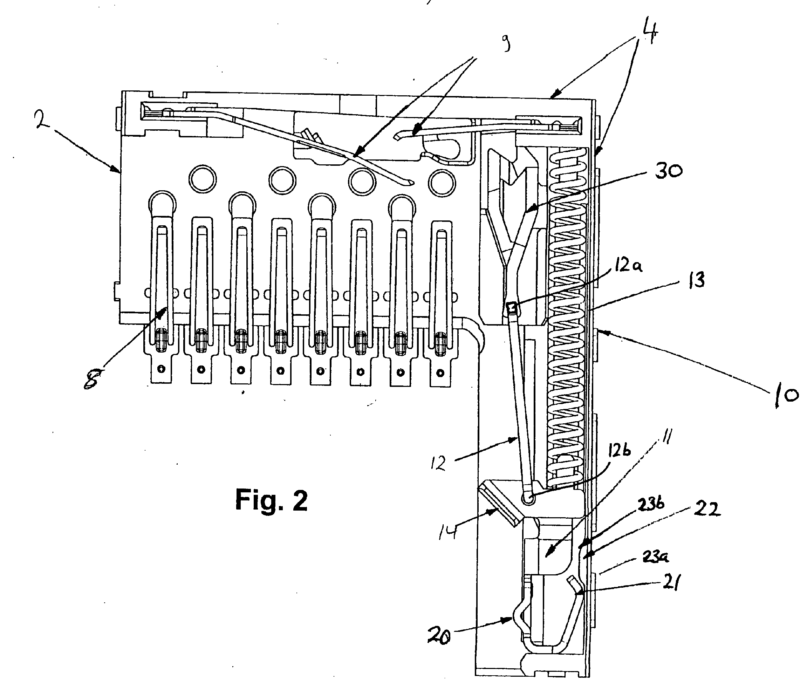

In Figur 2 ist der Kontaktträger 2 gezeigt, mit zentral angeordneten Kontakten 8, die einen elektrischen Kontakt zwischen einer hier nicht dargestellten Karte 5 und dem Kartenleser 1 herstellt.

Der Rahmen 4 oberhalb der Kontakte 8, sowie an der rechten Außenseite des Kontaktträgers 2, entlang der Feder 13, welche in diesem Ausführungsbeispiel durch eine Spiralfeder 13 realisiert ist, stellt einen geschlossenen Rahmen 4 dar. Der oberhalb der Kontakte 8 liegende Teil dieses Rahmens 4 nimmt zusätzlich teilweise einen Kontaktanwesenheitsschalter 9 auf.

Die Funktionsweise des Push-Push Mechanismus 10 verläuft im Allgemeinen so, dass eine Karte 5 in den Kartenleser 1 mit einem ersten Push eingeführt wird, um in einer Leseposition zu verharren. Anschließend wird die Karte 5 mittels eines zweiten Pushes, unter Unterstützung der Spiralfeder 13 wieder aus dem Kartenleser 1 herausbefördert. In dem erfindungsgemäßen Kartenleser 1, wird das Herausbefördern eingeschränkt durch einen Rückhaltemechanismus, der später näher erläutert wird.

Wie schon eingangs erwähnt besteht ein Problem gängiger Kartenleser in den geringen Haltekräften von Steuerelementen innerhalb der Steuerkurven. Um diese zu vergrößern wird gemäß der vorliegenden Erfindung, eine zweite Steuerkurve vorgesehen, die als Steuerkurvenaussparung 300 im Deckel 3 ausgebildet ist, in die , das als T-förmiger.Steuerdraht ausgebildete Steuerelement 12 zusätzlich zum Eingriff in die kontaktträgerseitige Steuerkurve in die Steuerkurvenaussparung 300 eingreift.

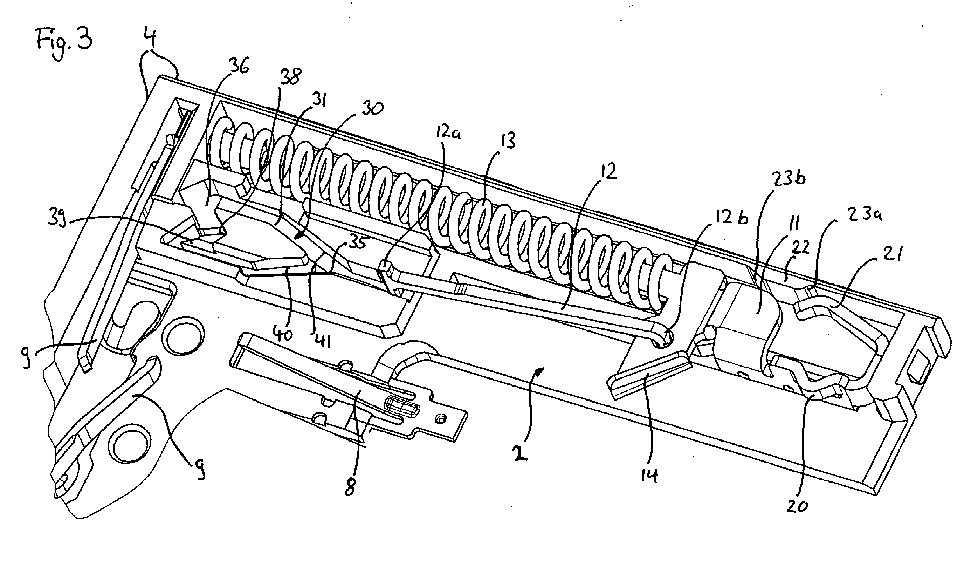

Des Weiteren kann die Bauhöhe des erfindungsgemäßen Kartenlesers verringert werden, indem der eine Laufbahn 31 bildende Steuerkurvenkanal 30, in der Art ausgeführt, dass die Anzahl der Höhenunterschiede (Δh) der Laufbahn (31) des Steuerkurvenkanals 30 und entsprechende unterschiedliche Steuerkurvenkanalabschnitte, im weiteren Verlauf der Beschreibung kurz SKA genannt, auf vorzugsweise zwei reduziert wird. In Figur 3 sieht man einen perspektivisch vergrößerten Ausschnitt von Figur 2, bei der der Push-Push Mechanismus 10 in einer Ausgangsstellung SKA 34, d. h. ohne eingeführte Karte gezeigt ist. Man erkennt zwei Stufen (37, 39), die eine Rastposition SKA 38 flankieren. Die unterschiedlichen Steuerkurvenkanalabschnitte, SKA 35, SKA 38 und SKA 40 weisen alle den gleichen Höhenunterschied h1, relativ zum Höhenniveau des Kontaktträgerbodens h0, auf. Der SKA 36, die Höhe des eine Rampe bildenden SKA 39 und SKA 40, weisen einen zweiten, bezüglich der Rastposition SKA 38, größeren Höhenunterschied h2 ebenfalls gemessen vom Kontaktträgerboden h0 auf. Womit gilt:

$$h2 > h1 > h0$$

Ebenfalls in Figur 3 ist ein Stoppelement 22 zu erkennen, welches später genauer erläutert wird.

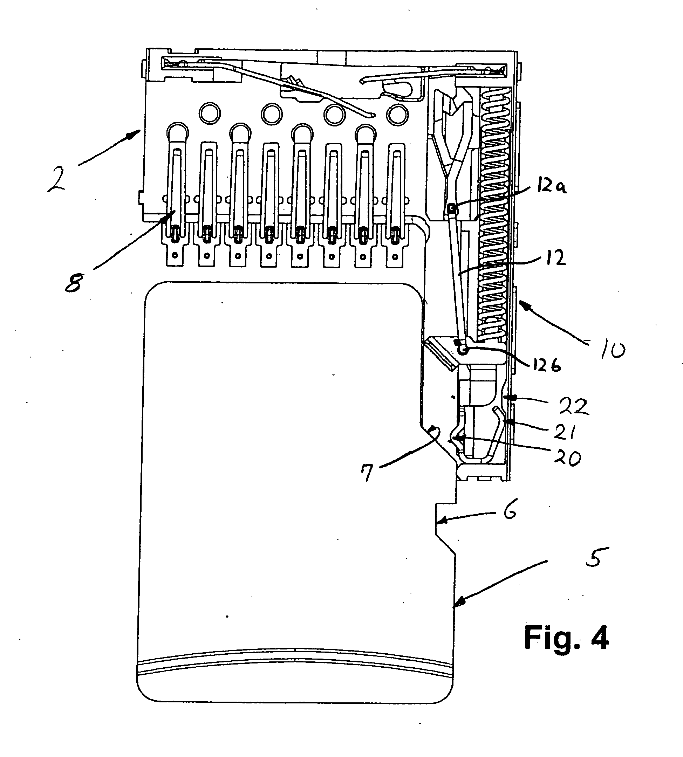

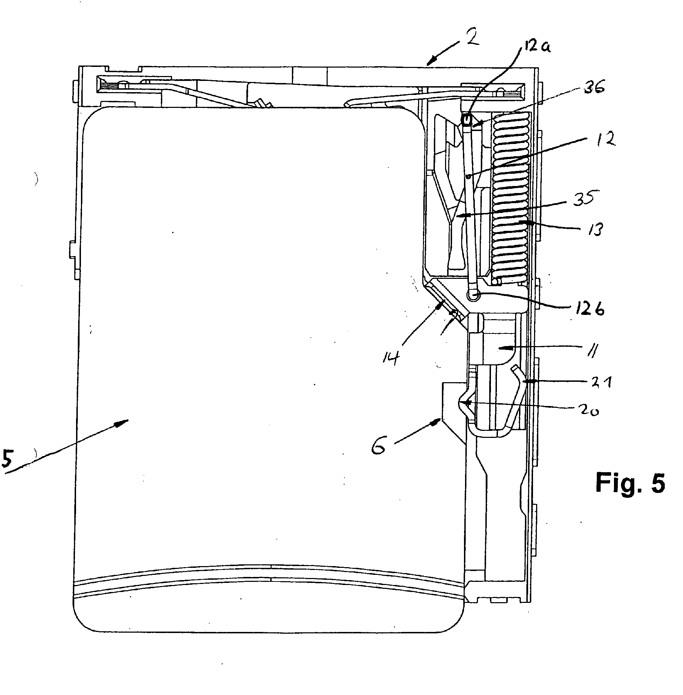

Figur 4 zeigt den Beginn eines Karteneinschubs. Eine Kartenanlagefläche 7 überstreicht eine am Kartenschieber 11 ausgebildete Einrastnase 20. Da eine ebenfalls am Kartenschieber 11 ausgebildete Bremsnase 21 in Verbindung mit dem Stoppelement 22, den Kartenschieber 11 in der Ausgangstellung 34 hält, bis die Einrastnase 20 in der Kartenaussparung 6 eingerastet ist und die Karte 5 mit ihrer Kartenanlagefläche 7 an der Kartenschieberanlagefläche 14 anliegt, was in Figur 5 dargestellt ist.

Beim anschließenden weiteren Einführen der Karte 5 in den Push-Push-Kartenleser 1, vergleiche Figur 5, wird das T-förmige Steuerelement 12 über den Kartenschieber 11 im Steuerkurvenkanal 30 und teilweise in der Steuerkurvenaussparung 300 im Deckel 3 (in Fig. 5 nicht gezeigt) entlang geführt, wobei die Spiralfeder 13 zusammen gepresst wird. Diese Bewegung des Steuerelementes 12 beginnt im SKA 35, verläuft entlang dieses Abschnitts 35 und endet nach dem vollständigen Einführen der Karte 5 in einer Überhubposition SKA 36 (Fig. 5).

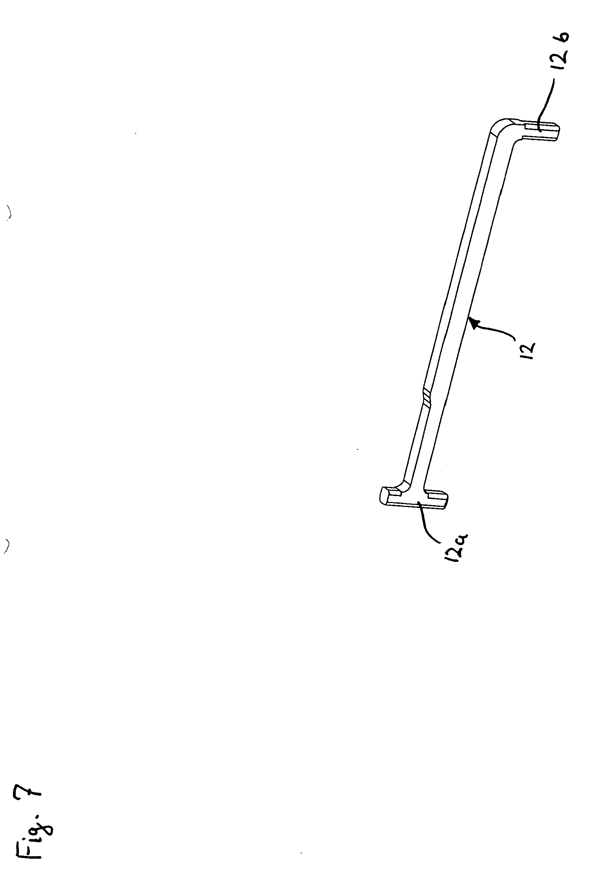

Das T-förmige Steuerelement 12 ist noch mal detailliert in Figur 7 gezeigt. In dieser Darstellung ist der T-Anker 12a oder Eingreif-Ende, sowie das Befestigunsende 12b gut zu erkennen.

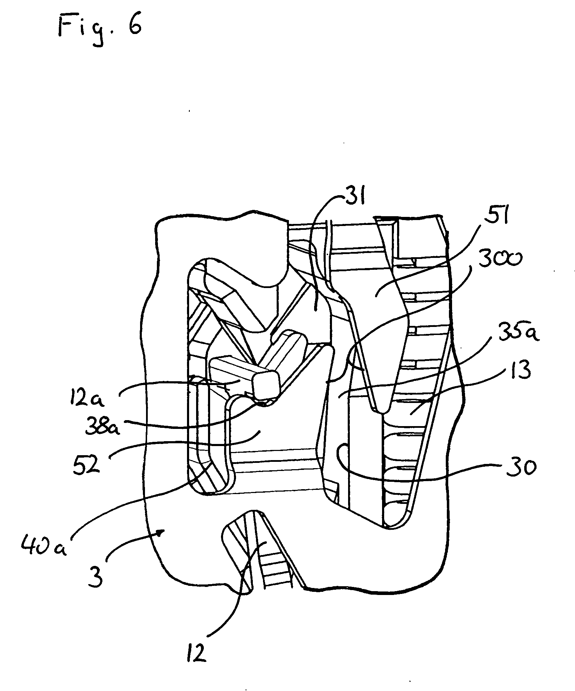

Figur 6 zeigt eine Detaildarstellung der Steuerkurvenaussparung 300 im Metalldeckel 3.

Das gezeigte Ruheposition-Biegeteil 52 drückt zusätzlich auf das T-förmige Steuerelement 12, um eine saubere Führung im Steuerkurvenkanal 30 und auf der Laufbahn 31 zu gewährleisten. Wird die Karte 5 in den Kartenleser eingeführt, so wird der T-Anker 12a mit einem oberen Ende entlang des Einschub-Biegeendes 51 innerhalb der Steuerkurvenaussparung 300 zusätzlich geführt. Hierbei kann eine seitliche Kraft auf das T-förmige Steuerelement 12 durch das Einschub-Biegeende 51 aufgebracht werden, was zu einer seitlichen Ablenkung des T-förmigen Steuerelementes 12 führt und dieses in die Ruhe- oder Leseposition 38, 38a leitet. Beim späteren Auswerfen der Karte wird über die Deckelfeder 50 zusätzlich eine Kraft auf das Steuerelement 12 ausgeübt, was zu einem Abbremsen zusätzlich zu dem des Stoppelementes 22 führt und ein Herausschleudern der Karte verhindert.

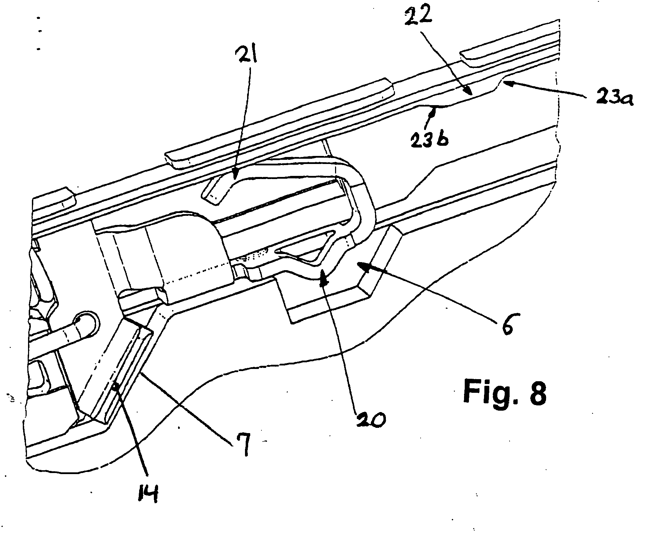

Figur 8 zeigt ein Detail des Kartenschiebers 11 mit eingesetzter Karte. In dieser Darstellung ist nochmals gut zu erkennen, wie der Kartenschieber 11 mit der Einrastnase 20 in der Kartenaussparung 6 eingerastet ist.

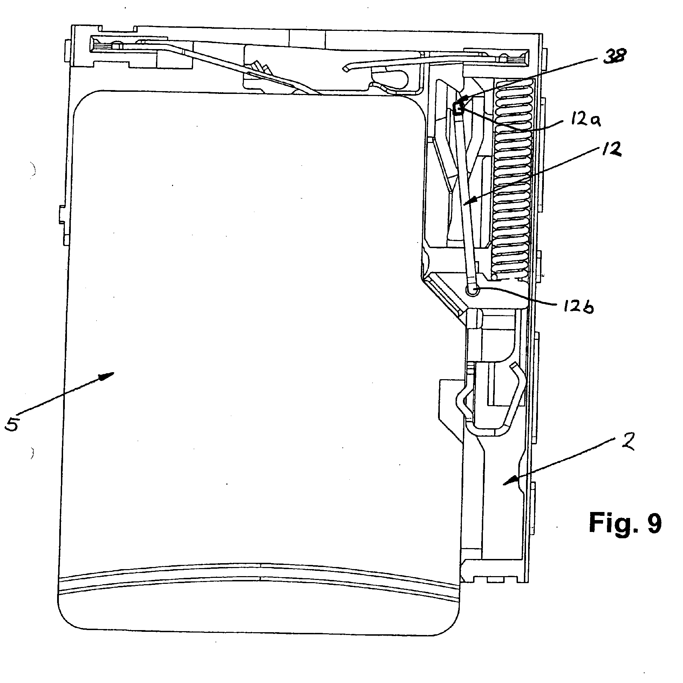

Der erste Push auf die Karte 5, befördert diese wie beschrieben in die Überhubposition SKA 36, um diese nach dem Loslassen der Karte und nach Überwinden einer ersten Stufe SKA 37 in die Rastposition SKA 38 und 38a in der Steuerkurvenaussparung zu gelangen. Diese Position ist in Figur 9 dargestellt.

Die Rastposition SKA 38 und 38a in der Steuerkurvenaussparung, auch Leseposition genannt, wird dann nach einem zweiten Push wieder verlassen, wobei das T-förmige Steuerelement 12 die zweite Stufe SKA 39, welche vorzugsweise als Rampe 39 ausgeführt ist, überwindet und über SKA 40, wieder in die Ausgangsstellung SKA 34 zurückkehrt.

Sobald die Karte, mit dem zweiten Push aus der Rastposition SKA 38 und 38a in der Steuerkurvenaussparung 300 befördert wird, wirken Reibungskräfte zwischen den Federlappen 50 und der Karte 5 und bremst diese ab. Gegen Ende des Herausbeförderns der Karte 5, wenn der Kartenschieber 11 mit seinem U-förmigen Ende und hier speziell mit der Bremsnase das Stoppelement 22 erreicht, wird der Kartenschieber 11 am Stoppelement 22 zusätzlich abgebremst. Die Karte 5 verbleibt jedoch im Push-Push Kartenleser 1, da die Einrastnase 20 nach wie vor in der Kartenaussparung 6 eingerastet ist. Dieses Einrasten verhindert nicht nur ein Herausschleudern der Karte, sondern ermöglicht auch einen Einbau des Push-Push Kartenlesers 1 in einer Überkopfposition, also einer Position z.B. an der Unterseite eines Camcorders, ohne dass die Karte 5 nach dem zweiten Push aus dem Gerät fällt.

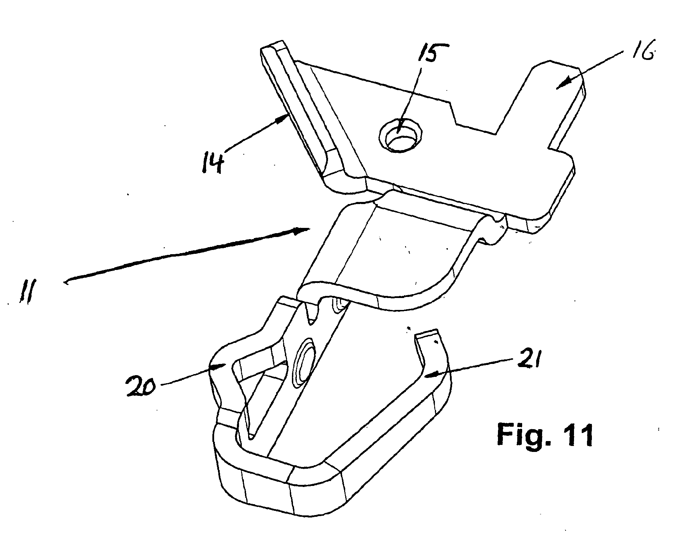

Figur 11 zeigt in vergrößerter Darstellung den Kartenschieber 11, mit der Einrastnase 20, der Bremsnase 21 und der Kartenschieber-Anlagefläche 14. Die Aufnahme für das Steuerelement 15 und die Aufnahme für die Spiralfeder 16 dienen der Fixierung des T-förmigen Steuerelements 12 und der Spiralfeder 13.

Das ebenfalls in Figur 3 dargestellte Stoppelement 22, weist an seiner einen Seite einen Radius 23a auf, der gegenüber Radius 23b kleiner ist. Dies führt beim Einführen der Karte dazu, dass der Kartenschieber 11 mit seiner Bremsnase 21 so lange am Stoppelement 22 verbleibt, bis die Karte 5 an der Kartenschieber-Anlagefläche 14 anliegt und den Kartenschieber 11 in der erwünschten Weise voran schiebt. Ohne das Stoppelement 22 könnte der Kartenschieber 11 aufgrund von Reibung zwischen dem Kartenschieber 11 und der Karte 5 schon bewegt werden, bevor die Karte an der Kartenschieber-Anlagefläche 14 anliegt, was zu einem Verkanten der Karte und zur Beschädigung des Kartenlesers führen könnte.

Der Radius 23b des Stoppelementes 22 verzögert in Verbindung mit der Bremsnase 21 am U-förmigen Teil des Kartenschiebers 11 das Auswerfen der Karte 5 beim zurückschnellen des Kartenschiebers.

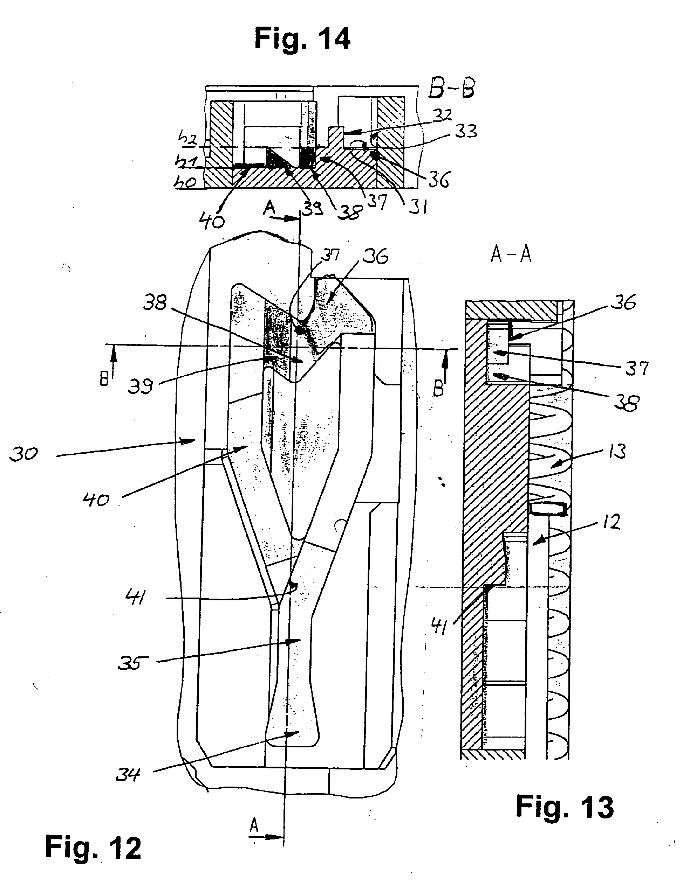

Figur 12 zeigt nochmals den Steuerkurvenkanal 30 mit den verschiedenen Steuerkurvenkanalabschnitten, wie in den vorherigen Ausführungen erläutert. Figur 13 stellt einen Schnitt, wie in Figur 12 angedeutet entlang der Linie A-A dar. Vergleicht man den oberen Teil der Zeichnung, in der sowohl die Rastposition SKA 38, als auch das Plateau SKA 36 zu erkennen sind mit dem unteren Teil der Zeichnung, so ist zu erkennen, dass SKA 35 und SKA 38 auf einem Höhenniveau h1 liegen und SKA 37 und SKA 41 auf einem zweiten Höhenniveau h2. Das T-förmige Steuerelement 12 befindet sich in dieser Zeichnung zwischen der Startposition und der Überhubposition, also noch vor SKA 36.

In Figur 14 sieht man einen Schnitt, eingezeichnet als Linie B-B in Figur 12. Gut zu erkennen ist, dass sich bezüglich des Kontaktträgerbodens mit der Höhe h0, SKA 40 und die Rastposition SKA 38 auf derselben Höhe h1 befinden und die Stufen SKA 37 und SKA 39 die gleiche Höhe h2 besitzen wie das Plateau SKA 36.

Bezugszeichenliste

| | |
|---|---|
| 1 | Push-Push Kartenleser |
| 2 | Kontaktträger |
| 3 | Deckel |
| 4 | Rahmen |
| 5 | Karte |
| 6 | Kartenaussparung |
| 7 | Karten-Anlagefläche |
| 8 | Kontakte |
| 9 | Kartenanwesenheitsschalter |
| 10 | Push-Push Mechanismus |
| 11 | Kartenschieber |
| 12 | Steuerelement |
| 12a | T-Anker, Eingreif-Ende |
| 12b | Befestigungsende |
| 13 | Spiralfeder |
| 14 | Kartenschieber-Anlagefläche |
| 15 | Aufnahme für Steuerelement |
| 16 | Aufnahme für Spiralfeder |
| 20 | Einrastnase |
| 21 | Bremsnase |
| 22 | Stoppelement |
| 23a | Radius am Stoppelement |

| | |
|---|---|
| 23b | Radius am Stoppelement |
| 30 | Steuerkurvenkanal |
| 31 | Laufbahn |
| 32 | innere Führungsbahn |
| 33 | äußere Führungsbahn |
| 34 | SKA Ausgangsstellung |
| 35 | SKA-Einschub |
| 36 | SKA- Plateau |
| 37 | SKA- Stufe |
| 38 | SKA-Rastposition, bzw. Leseposition |
| 38a | Rast- oder Leseposition in Steuerkurvenaussparung |
| 39 | SKA-Rampe |
| 40 | SKA-Auswurf |
| 41 | SKA-Stufe |
| 50 | Federlappen |
| 51 | Einschub-Biegeteil |
| 52 | Rastposition-Biegeteil |
| 60 | Karteneinführöffnung |
| 300 | Steuerkurvenaussparung |

**Patentansprüche**

1. Push-Push Kartenleser (1) mit
einem Kontaktträger (2),
einem Deckel (3) und einem durch die einzusteckende und zu lesende Karte (5) betätigbaren Push-Push Mechanismus (10), der folgendes aufweist:

einen hin- und herbeweglich angeordneten Kartenschieber (11),
einen im r Kontaktträger (2) befindlichen Steuerkurvenkanal (30),
ein mit dem Steuerkurvenkanal (30) in Eingriff stehendes Steuerelement (12), welches mit einem Teil eines Eingriffs-Endes (12a) in den Steuerkurvenkanal (30) eingreift, und an einem anderen Ende, dem Befestigungssende (12b), am Kartenschieber (11) angebracht ist,
wobei der Steuerkurvenkanal (30) eine von inneren und äußeren Führungsbahnen (32, 33) begrenzte Laufbahn (31) aufweist, und eine einer Leseposition der Karte (5) entsprechende im Steuerkurvenkanal (30) angeordnete Rastposition (38) für das Steuerelement (12) definiert,
wobei die Laufbahn (31) des Steuerkurvenkanals (30) vorzugsweise im Bereich der Rastposition (38) des Steuerkurvenkanals (30) mehrere, vorzugsweise nur zwei Höhenunterschiede bildet, **dadurch gekennzeichnet, dass** sich im Deckel (3) eine Steuerkurvenaussparung (300) befindet, wobei die Steuerkurvenaussparung (300) eine von einem Einschub-Biegeteil (51) und einem Rastposition-Biegeteil (52) definierte Aussparung ist, die eine der Rast- oder Leseposition der Karte (5) entsprechende, in der Steuerkurvenaussparung (300) angeordnete Rastposition (38a) definiert und das Steuerelement (12) mit einem anderen Teil des Eingriffs-Endes in die Steuerkurvenaussparung (300) eingreift.

2. Kartenleser nach Anspruch 1, wobei der Steuerkurvenkanal (30) folgende Steuerkurvenkanalabschnitte aufweist:

eine Ausgangsstellung (34), einen Einschub (35), ein Plateau (36), eine Stufe (37), eine Rampe (39), einen Auswurf (40) und eine weitere Stufe (41).

3. Kartenleser (1) nach Anspruch 2, wobei der Steuerkurvenkanal (30) im Bereich der Rastposition (38) über das Plateau (36), die Stufe (37) und die Rampe (39) verfügt.

4. Kartenleser nach Anspruch 1, wobei die Steuerkurvenaussparung (300) folgende Steuerkurvenaussparungsabschnitte aufweist:

einen Einschub (35a), eine Rastposition (38a) und einen Auswurf (40a).

5. Kartenleser (1) nach Anspruch 1, wobei das Steuerelement (12) ein T-förmiger Steuerdraht (12), ein gestanzter T-förmiger Steuerdraht ist.

6. Kartenleser (1) nach Anspruch 2 und 5, wobei der T-förmige Steuerdraht (12) den Steuerkurvenkanal (30) und die Steuerkurvenaussparung (300) durch einen ersten Push, entlang des Einschubs (35) und einer Überhubposition auf dem Plateau (36) in eine Rastposition (38, 38a), durchläuft.

7. Kartenleser (1) nach Anspruch 2 und 5, wobei der T-förmige Steuerdraht (12) den Steuerkurvenkanal (30) und die Steuerkurvenaussparung (300) durch einen zweiten Push, entlang des Auswurfs (40) aus der Rastposition (38, 38a) in die Ausgangsstellung (34), durchläuft.

8. Kartenleser (1) nach Anspruch 6, wobei die Rastposition (38) eine geringere Höhe als das Plateau (36) und das obere Ende der Rampe (39) besitzt.

9. Kartenleser (1) nach einem der Ansprüche 1-8, wobei der am Kontaktträger angebrachte Deckel (3) ein Metalldeckel (3) ist und wobei der Metalldeckel (3) ferner mindestens einen Federlappen (50) enthält, der eine die Karte (5) führende und Karten (5) bremsende Wirkung erzeugt, sowie eine bremsende Wirkung am T-förmigen Steuerelement (12) bewirkt.

10. Kartenleser (1) nach einem der vorhergehenden Ansprüche, wobei die Steuerkurvenaussparung (300) durch Ausstanzen aus dem Metalldeckel (3) ausgeführt ist.

11. Kartenleser nach Anspruch 4-8, wobei der Einschub (35a), die Rastposition (38a) und der Auswurf (40a) über ein Einschub-Biegeteil (51) und ein Rastposition-Biegeteil (52) des Metalldeckels (3) gebildet werden, und wobei der Kontaktträger (2) einen Kartenanwesenheitsschalter (6) besitzt, der von der Karte (5) in der Leseposition betätigt wird.

12. Kartenleser (1) nach Anspruch 1, wobei der Kontaktträger(2) über einen Rahmen (4) verfügt, und wobei ein Federabschnitt am Kartenschieber (11) eine Einrastnase (20) besitzt, die beim Einführen der Karte (5) ein verfrühtes Bewegen des Kartenschiebers (11) durch Blockieren an einem ersten Radius (23a) eines Stoppelements (22) verhindert und beim Ausführen der Karte (5) nach dem zweiten Push, ein Abbremsen des Kartenschiebers (11) einem zweiten Radius (23b) des Stoppelements (22) verursacht.

13. Kartenleser (1) nach Anspruch 1, **dadurch gekennzeichnet, dass** der Kontaktträger (2) mit einem Federabschnitt ausgestattet ist, der ein Abbremsen des Kartenschiebers (11) an einem Stoppelement (22) bewirkt, wenn eine Karte (5) über einen zweiten Push aus einer Rastposition (38) in eine Entnahme oder Ausgangsstellung (34) gebracht wird und der weiterhin ein Auswerfen und Blockieren der Karte (5) bewirkt, wobei das Blockieren der Karte (5) ein Herausfallen derselben aus dem Kartenleser (1) verhindert, wenn sich diese in der Ausgangsstellung (34) befindet.

14. Kartenleser (1) nach Anspruch 12, wobei das Stoppelement (22) über zwei verschiedene Radien (23a, 23b) verfügt, und wobei der Federabschnitt am Kartenschieber (11) eine Bremsnase (21) besitzt, die durch Einrasten in die Aussparung an der Karte (5), ein Blockieren der Karte (5) bewirkt und somit ein Herausfallen der Karte (5) an der Entnahmeposition verhindert.

15. Kartenleser (1) nach Anspruch 12, wobei das Stoppelement (22) aus dem Kontaktträger (2) ausgebildet ist, bzw. von diesem gebildet wird, und wobei der Kartenschieber (11) eine Kartenschieber-Anlagefläche (14) besitzt, die ein um 180° zur Kartenschieber Bewegungsrichtung verdrehtes Einführen der Karte (5), bis in die Leseposition, verhindert.

## Claims

1. A push-push card reader (1) comprising:

   a contact support (2),
   a cover (3) and a push-push mechanism (10) which is actuated by means of a card (5) which is insertable and readable;

   said push-push mechanism (10) comprising:

   a reciprocally movable card slide (11),
   a control curve channel (30) located in the contact support (2),
   a control element (12) which is in engagement with the control curve channel (30) by means of a part of an engagement end (12a), said control element (12) being mounted at another end, the mounting end (12b), at the card slide (11), wherein said control curve channel (30) comprises a running path (31) which is bordered by inner and outer guide paths (32, 33), and defines in the control curve channel (30) a detent position (38) for the control element (12), which corresponds to a reading position for the card (5), wherein said running path (31) of the control curve channel (30) comprises preferably in the area of the detent position (38) of the control curve channel (30) a plurality, preferably only two, height level differences,

   **characterized in that**

   a control curve recess (300) is provided in the cover (3),
   said control curve recess (300) is a recess defined by an insert bending portion (51) and a detent position bending portion (52), said recess defining corresponding to the detent reading position of the card (5) a detent position (38a) in the control curve recess (300), and wherein the control element (12) is in engagement with another part of the engagement end in the control curve recess (300).

2. The card reader as set forth in claim 1, wherein the control curve channel (30) comprises the following control curve channel sections:

   a start position (34), an insert (35), a plateau (36), a step (37), a ramp (39), an ejector (40) and a further step (41).

3. The card reader (1) as set forth in claim 2 wherein the control curve channel (30) comprises in the area of the detent position (38) the plateau (36), the step (37) and the ramp (39).

4. The card reader as set forth in claim 1, wherein said control curve recess (300) comprises the following control curve recess sections:

an insert (35a), a detent position (38a) and an ejector (40a).

5. The card reader (1) as set forth in claim 1, wherein the control element (12) comprises a T-shaped control wire (12) which is a stamped T-shaped control wire.

6. The card reader (1) as set forth in claims 2 and 5, wherein said T-shaped control wire (12) moves through the control curve channel (30) and the control curve recess (300) by a first push along the insert (35) and a lift position on the plateau (36) in a detent position (38).

7. The card reader (1) as set forth in claims 2 and 5, wherein the T-shaped control wire (12) moves through the control curve channel (30) and the control curve recess (300) by a second push along the ejector (40) out of the detent position (38, 38a) into the start position (34).

8. The card reader (1) as set forth in claim 6, wherein the detent position (38) has a lower level or height than the plateau (36) and the upper end of the ramp (39).

9. The card reader (1) as set forth in one of claims 1 to 8, wherein the cover (3) mounted to the contact support is a metal cover (3) and wherein the metal cover (3) comprises at least one spring tap (50) which creates an effect which guides the card (5) and brakes the card (5) and also effects a braking action at the T-shaped control element (12).

10. The card reader (1) as set forth in one of the preceding claims wherein the control curve recess (300) is formed by being stamped out of the metal cover (3).

11. The card reader as set forth in claims 4 to 8, wherein the insert (35a), the detent position (38a) and the ejector (40a) are formed by an insert bending portion (51) and a detent position bending portion (52) of the metal cover (3) and wherein the contact support (2) comprises a card presence switch (6) which is actuated by the card (5) in the reading position.

12. The card reader (1) as set forth in claim 1, wherein the contact support (2) comprises a frame (4) and wherein a spring section at the card slide (11) comprises a detent nose (20) which, during insertion of the card (5), avoids a premature movement of the card slide (11) by blocking at a first radius (23a) of a stop element (22) and wherein said detent nose (20), when the card (5) is ejected after a second push, causes a braking effect on the card slide (11) by a second radius (23b) of the stop element (22).

13. The card reader (1) as set forth in claim 1, **characterized in that** the contact support (2) is provided with a spring section, which causes a braking of the card slide (11) at a stop element (22) at the time a card (5) is moved by means of a second push from a detent position (38) into the take-out or start position (34), and wherein said spring section causes an ejection or a blocking of the card (5), whereby the blocking of the card (5) hinders a drop of the card out of the card reader (1) at the time the card is in the start position (34).

14. The card reader (1) as set forth in claim 12 wherein the stop element (22) comprises two different radii (23a, 23b) and wherein the spring section at the card slide (11) comprises a braking nose (21), which due to an insertion into the recess at the card (5) causes a blocking of the card (5) and thus a drop out of the card (5) at the position of removal.

15. The card reader (1) as set forth in claim 12, wherein the stop element (22) is formed by the contact support (2) where it is formed by said contact support and wherein the card slide (11) comprises a card slide abutment surface (14) which makes it impossible that the card (5) is inserted up to the reading position by a 180° tilted insertion with respect to the card slide direction of movement.

**Revendications**

1. Lecteur de carte du type à double poussée (1) comprenant :

un support de contacts (2),
un couvercle (3) et un mécanisme de double poussée (10) qui est actionné au moyen d'une carte (5) qui peut être insérée et lue ;
le mécanisme de double poussée (10) comprenant :

une glissière de carte à mouvement alternatif (11),
un canal de courbe de contrôle (30) situé dans le support de contacts (2),
un élément de commande (12) qui est en contact avec le canal de courbe de contrôle (30) au moyen d'une partie d'une extrémité de contact (12a), l'élément de commande (12) étant monté à une autre extrémité, l'extrémité de montage (12b), au niveau de la glissière de carte (11),
dans lequel le canal de courbe de contrôle (30) comprend un chemin de circulation (31) qui est bordé par des chemins de guidage intérieur et extérieur (32, 33), et définit dans le canal de courbe de contrôle (30) une position de détente (38) pour l'élément de commande (12), qui correspond à une position de lecture pour la carte (5),

dans lequel le chemin de circulation (31) du canal de courbe de contrôle (30) comprend de préférence dans la région de la position de détente (38) du canal de courbe de contrôle (30) une pluralité de différences de niveau de hauteur, de préférence seulement deux,

**caractérisé en ce que**

un évidement de courbe de contrôle (300) est prévu dans le couvercle (3), l'évidement de courbe de contrôle (300) est un évidement défini par une portion de courbure d'insertion (51) et une portion de courbure de position de détente (52), l'évidement définissant en correspondance avec la position de lecture de détente de la carte (5) une position de détente (38a) dans l'évidement de courbe de détente (300), et dans lequel l'élément de commande (12) est en contact avec une autre partie de l'extrémité de contact dans l'évidement de courbe de contrôle (300).

2. Lecteur de carte selon la revendication 1, dans lequel le canal de courbe de contrôle (30) comprend les sections suivantes de canal de courbe de contrôle :

une position de départ (34), une fente (35), un plateau (36), une marche (37), une rampe (39), un éjecteur (40) et une autre marche (41).

3. Lecteur de carte (1) selon la revendication 2, dans lequel le canal de courbe de contrôle (30) comprend dans la région de la position de détente (38) le plateau (36), la marche (37) et la rampe (39).

4. Lecteur de carte selon la revendication 1, dans lequel l'évidement de courbe de contrôle (300) comprend les sections d'évidement de courbe de contrôle suivantes :

une fente (35a), une position de détente (38a) et un éjecteur (40a).

5. Lecteur de carte (1) selon la revendication 1, dans lequel l'élément de commande (12) comprend un fil de commande en forme de T (12) qui est un fil de commande en forme de T poinçonné.

6. Lecteur de carte (1) selon les revendications 2 et 5, dans lequel le fil de commande en forme de T (12) se déplace dans le canal de courbe de contrôle (30) et l'évidement de courbe de contrôle (300) par une première poussée le long de la fente (35) et une position soulevée sur le plateau (36) dans une position de détente (38).

7. Lecteur de carte (1) selon les revendications 2 et 5, dans lequel le fil de commande en forme de T (12) se déplace dans le canal de courbe de contrôle (30) et l'évidement de courbe de contrôle (300) par une deuxième poussée le long de l'éjecteur (40) pour sortir de la position de détente (38, 38a) pour aller dans la position de départ (34).

8. Lecteur de carte (1) selon la revendication 6, dans lequel la position de détente (38) est à une hauteur inférieure à celle du plateau (36) et à l'extrémité supérieure de la rampe (39).

9. Lecteur de carte (1) selon l'une des revendications 1 à 8, dans lequel le couvercle (3) monté sur le support de contacts est un couvercle en métal (3), et dans lequel le couvercle en métal (3) comprend au moins une patte à ressort (50) qui crée un effet qui guide la carte (5) et freine la carte (5) et a aussi une action de freinage au niveau de l'élément de commande en forme de T (12).

10. Lecteur de carte (1) selon l'une quelconque des revendications précédentes, dans lequel l'évidement de courbe de contrôle (300) est formé par poinçonnage du couvercle métallique (3).

11. Lecteur de carte selon les revendications 4 à 8, dans lequel la fente (35a), la position de détente (38a) et l'éjecteur (40a) sont formés par une portion de courbure de fente (51) et une portion de courbure de position de détente (52) du couvercle en métal (3), et dans lequel le support de contacts (2) comprend un commutateur de présence de carte (6) qui est actionné par la carte (5) dans la position de lecture.

12. Lecteur de carte (1) selon la revendication 1, dans lequel le support de contacts (2) comprend un châssis (4) et dans lequel une section de ressort au niveau de la glissière de carte (11) comprend un nez de détente (20) qui, pendant l'insertion de la carte (5), évite un mouvement prématuré de la glissière de carte (11) en bloquant au niveau d'un premier rayon (23a) d'un élément d'arrêt (22) et dans lequel le nez de détente (20), lorsque la carte (5) est éjectée après une deuxième poussée, provoque un effet de freinage sur la glissière de carte (11) par un deuxième rayon (23b) de l'élément d'arrêt (22).

13. Lecteur de carte (1) selon la revendication 1, **caractérisé en ce que** le support de contacts (2) et muni d'une section à ressort, qui provoque un freinage de la glissière de carte (11) au niveau d'un élément d'arrêt (22) au moment où une carte (5) est déplacée au moyen d'une deuxième poussée de la position de détente (38) vers la position de reprise ou de départ (34), et dans lequel la section à ressort provoque une éjection ou un blocage de la carte (5), d'où il résulte que le blocage de la carte (5) empêche que la carte ne chute hors du lecteur de carte (1) au moment où la carte est dans la position de départ (34).

14. Lecteur de carte (1) selon la revendication 12, dans lequel l'élément d'arrêt (22) comprend deux rayons différents (23a, 23b) et dans lequel la section de ressort au niveau de la glissière de carte (11) comprend un nez de freinage (21), qui en raison d'une insertion dans l'évidement au niveau de la carte (5), provoque un blocage de la carte (5), et ainsi une chute de la carte (5) à la position de retrait.

15. Lecteur de carte (1) selon la revendication 12, dans lequel l'élément d'arrêt (22) est formé par le support de contacts (2) là où il est formé par le support de contacts, et dans lequel la glissière de carte (11)) comprend une surface de butée de glissière de carte (14) qui fait qu'il est impossible d'insérer la carte (5) jusqu'à la position de lecture par une insertion inclinée de 180° par rapport à la direction de mouvement de la glissière de carte.

Fig.1

Fig. 2

EP 2 293 224 B1

Fig. 3

13

Fig. 4

**Fig. 5**

Fig. 6

Fig. 7

**Fig. 8**

**Fig. 9**

Fig. 10

Fig. 11

**Fig. 14**

B-B

**Fig. 12**

A-A

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   EP 1434315 A1